# EUROPEAN PATENT APPLICATION

(11) **EP 4 219 577 A1**
(43) Date of publication of application: **02.08.2023**
(21) Application number: 22461502.1
(22) Date of filing: 27.01.2022
(51) Int. Cl.: C08G 18/18, C08G 18/20, C08G 18/24, C08G 18/30, C08G 18/32, C08G 18/48, C08G 18/66, C08G 18/76

(54) **POLYETHER POLYOL COMPOSITION FOR PRODUCING VISCOELASTIC POYURETHANE FOAMS**

(71) Applicant: PCC ROKITA Spolka Akcyjna, 56-120 Brzeg Dolny (PL)
(72) Inventor: BARTNICKI, Lukasz, 51-114 Wroclaw (PL); SALASA, Michael, 56-120 Brzeg Dolny (PL); WROBLEWSKA, Magdalena, 51-169 Wroclaw (PL); MAKULA, Lukasz, 51-114 Wroclaw (PL)
(74) Representative: AOMB Polska Sp. z.o.o.

(57) **Abstract**

The invention relates to a polyether polyol composition for preparing viscoelastic polyurethane foams, comprising the following: at least one polyether polyol with a hydroxyl number of 300 to 600 mgKOH/g, a functionality of 2 to 6 and an ethylene oxide content of up to 20% based on the total polyoxyalkylene oxide content, at least one polyether polyol with a hydroxyl number of 150 to 300 mgKOH/g, a functionality of 2 to 6 and an ethylene oxide content of up to 20% based on the total polyoxyalkylene oxide content; at least one polyether polyol with a hydroxyl number of 100 to 300 mgKOH/g, a functionality of 2 to 6 and an ethylene oxide content of more than 50% based on the total polyoxyalkylene oxide content; at least one polyether polyol with a hydroxyl number of 20 to 60 mgKOH/g, a functionality of less than 3 and an ethylene oxide content of 30 to 60% based on the total polyoxyalkylene oxide content; and optionally propanetriol, at least one polyether polyol with a hydroxyl number of 20 to 60 mgKOH/g, a functionality of less than 3 and an ethylene oxide content of up to 40% based on the total polyoxyalkylene oxide content and/or at least one polyether polyol with a hydroxyl number of 20 to 60 mgKOH/g, a functionality of 2 to 6 and an ethylene oxide content of up to 20% based on the total polyoxyalkylene oxide content. Furthermore, the invention relates to a method for producing a viscoelastic polyurethane foam and a foam thus produced.

## Description

### Field of the invention

The invention relates to a polyether polyol composition for preparing viscoelastic polyurethane foams, comprising a mixture of polyether polyols and optionally propanetriol. The invention also relates to a method for producing a viscoelastic polyurethane foam using a polyether polyol composition, and to a foam thus obtained.

### State of the art

Polyurethane foams are used in a variety of applications, from cushioning products (such as mattresses, pillows and seat cushions) to packaging, thermal insulation and medical applications. Polyurethanes may be adapted to specific applications by selecting the raw materials from which the polymer is prepared.

A type of polyurethane foams includes viscoelastic (VE) foams, also known as memory foams. They exhibit a time-delayed and rate-dependent response to applied stress, which is often correlated with the glass transition temperature (Tg) of the polyurethane. Like most polyurethane foams, viscoelastic polyurethane foams are produced by reacting a polyol component with a polyisocyanate in the presence of a foaming agent/porophore. The porophore is usually carbon dioxide generated after isocyanate is reacted with water present in the reaction mixture. Additional porophores, such as methylene chloride, may be used. The polyol component greatly affects the viscoelastic properties of polyurethane foam. Primary polyols used in compositions for preparing VE polyurethane foams have a functionality of approximately 3 and a molecular weight in the range 400-1500, which significantly affects the Tg of the foam, although other factors such as water level and isocyanate index are also of importance.

Preparation of viscoelastic polyurethane foam using diisocyanatoluene (TDI) is known. In such processes, dedicated silicone surfactants are used, whose limited availability, relatively high price, the need to implement a separate process line and a rather poor stability result in a limited range of applications. A similar situation concerns known methods for the preparation of viscoelastic polyurethane foam using polymeric methylene diphenyl diisocyanate (pMDI) and a silicone surfactant or another dedicated one for HR (high-resilience) foams.

The preparation of pneumatic viscoelastic polyurethane foam using a standard silicone surfactant is also known. However, pneumatic foams have a very poor airflow, which has an adverse effect on the comfort of its use. Moreover, the demand for pneumatic foams is relatively limited.

Last but not least, preparation of open-cell viscoelastic polyurethane foam with an isocyanate index below 90 using a standard silicone surfactant is known. An isocyanate index below 90 involves a high risk of emissions of the harmful substances toluenediamine (TDA) and methylenedianiline (MDA) which are forbidden in certain applications such as mattress manufacture. Furthermore, foaming at a low isocyanate index commonly hinders cross-linking and foam seasoning, which is a significant inconvenience in industrial scale processes.

A method is known for preparing viscoelastic polyurethane foam using dedicated silicones or a low isocyanate index isocyanate. A combination of at least three polyols is usually required to produce this type of foam: a triol with a weight of 400-1500 g/mol and an ethylene oxide content of up to 20%, a triol with a weight of 4000-5000 g/mol and an ethylene oxide content of 70-80%, and a triol with a weight of 3000-4000 g/mol and an ethylene oxide content of up to 20% for foams obtained using TDI or a triol with a weight of 5000-6000 g/mol and an ethylene oxide content of up to 20% for foams obtained using methylene diphenyl diisocyanate (MDI).

US 2016/0200855 A1 discloses viscoelastic polyurethane foams produced by reacting an isocyanate compound with water and a polyol mixture. The polyol mixture used constitutes PIPA (polyisocyanate polyaddition) polyols, wherein the dispersed polymer particles are polyurethane or polyurethane-urea and at least one other polyol, which is a polymer of propylene oxide or a copolymer of propylene oxide and ethylene oxide.

EP2041199B1 discloses a method for producing viscoelastic foam using a mixture of two different polyoxyethylene-polyoxypropylene polyols having strictly defined parameters and castor oil. The isocyanate index in this method is 60 to 95. A number of limitations of the composition of the polyol composition used in the method described are due to the fact that only MDI was used as the isocyanate. The only embodiment discloses the use of Tegostab^{®} B8716LF silicone surfactant, which the manufacturer considers to be a specialised/dedicated silicone for high resilience foams.

EP2621985B1 discloses a reaction system for preparing a viscoelastic polyurethane foam comprising an isocyanate component, water, a catalyst and a polyol composition comprising the following: (i) 45-70% by weight of a polyether polyol with a high content of propylene oxide units and an average equivalent molecular weight of 210 to 510; (ii) 20-30% by weight of a polyether polyol with a high content of ethylene oxide units and a combined number average equivalent molecular weight of 200 to 500; (iii) 10-25% by weight of a polyether polyol containing ethylene oxide units and alkylene oxide units selected from propylene oxide, butylene oxide or a mixture thereof, wherein the combined number average equivalent molecular weight of component (iii) ranges from 300 to 800; and (iv) 0.5 to 15% by weight of a polyether polyol with a high content of propylene oxide units, functionality 1 to 4 and a combined number average equivalent molecular weight of 2000 to 6000.

EP2225304B1 discloses a polyether polyol composition comprising four different polyols characterised by specific hydroxyl functionality values, hydroxyl number ranges, range of share of primary hydroxyl groups, range of content of propylene oxide units and ethylene oxide units.

US9376526B2 describes a polyether polyol mixture for preparing polyurethane foams with low resistance to airflow. The disclosed polyol mixture comprises four components that have different functionality, hydroxyl number and ethylene oxide unit content, wherein it is clearly said that for one of these polyol components, the terminal blocks in the polymer chains are not blocks consisting solely of ethylene oxide units.

EP3044245B1 discloses a method for obtaining a viscoelastic polyurethane foam with a density of 30 to 120 kg/m³, a resilience of less than 15% and a recovery time of up to 3 s, wherein a mixture of two polyol components is used as the polyol, the first of which is a dispersion of polyurethane and/or polyurethane-urea particles in a polyol carrier with an average molecular weight of 600 to 5000 and an average functionality of at least 2, wherein said particles constitute 5 to 50% by weight of the dispersion, and the dispersion has a hydroxyl number of at least 40. The second component of the polyol mixture is a propylene oxide homopolymer or copolymer having 20 to 99.9% by weight propylene oxide and 0.1 to 80% by weight ethylene oxide, with a functionality of 2 to 4 and an equivalent hydroxyl number of 200 to 400.

US20210206937A1 discloses a viscoelastic polyurethane foam prepared using a mixture of at least polyether polyols having different ethylene oxide unit content, functionality and molecular weight, wherein the foam is coated with a coating comprising a phase change material in an encapsulated (e.g., microencapsulated) form dispersed in an aqueous composition, such as latex.

Known market solutions allow for producing a viscoelastic polyurethane foam having at least one of the following characteristics:
- hardness: 1-5 kPa;
- resilience: not more than 15%;
- recovery time: at least 2 s;
- density: 30-80 kg/m³;
- air flow of at least 0,2 dm³/min.;
- use of a standard silicone surfactant for flexible foams;
- an isocyanate index of more than 90;
- use of TDI or pMDI or mixture of TDI and MDI

As far as the applicant is aware, there is no single product to combine all of the above characteristics at the same time. Therefore, there is a need to provide a possibility to prepare viscoelastic polyurethane foam with low hardness and resilience, relatively high recovery time, low density and high air flow, low risk of emissions of harmful substances such as TDA and MDA, which may be produced economically and which allows easy changes of isocyanate components without the need to modify process plants.

### Summary of the Invention

The object of the present invention was to meet the above defined need while avoiding the unfavourable features of prior art.

In the first aspect, the invention relates to a polyether polyol composition for the manufacture of viscoelastic polyurethane foams, characterised in that it contains the following components:
(a) 0-5% by weight of propanetriol,
(b) 1-10% by weight of at least one polyether polyol with a hydroxyl number of 300 to 600 mgKOH/g, a functionality of 2 to 6 and an ethylene oxide content of up to 20% based on the total polyoxyalkylene oxide content,
(c) 10-40% by weight of at least one polyether polyol with a hydroxyl number of 150 to 300 mgKOH/g, a functionality of 2 to 6 and an ethylene oxide content of up to 20% based on the total polyoxyalkylene oxide content,
(d) 10-40% by weight of at least one polyether polyol with a hydroxyl number of 100 to 300 mgKOH/g, a functionality of 2 to 6 and an ethylene oxide content of more than 50% based on the total polyoxyalkylene oxide content,
(e) 10-50% by weight of at least one polyether polyol with a hydroxyl number of 20 to 60 mgKOH/g, a functionality below 3 and an ethylene oxide content of up 30 to 60% based on the total polyoxyalkylene oxide content,
(f) 0-20% by weight of at least one polyether polyol with a hydroxyl number of 20 to 60 mgKOH/g, a functionality below 3 and an ethylene oxide content of up to 40% based on the total polyoxyalkylene oxide content,
(g) 0-30% by weight of at least one polyether polyol with a hydroxyl number of 20 to 60 mgKOH/g, a functionality of 2 to 6 and an ethylene oxide content of up to 20% based on the total polyoxyalkylene oxide content,
wherein in all the cases as above the weight % is indicated based on the total weight of the polyol composition.

In the second aspect, the invention relates to a method for producing a viscoelastic polyurethane foam, wherein the following are reacted:
(i) a polyether polyol composition according to any one of claims 1 to 4,
(ii) at least one isocyanate component with an isocyanate index of more than 90,
   in the presence of
(iii) at least one catalyst,
(iv) at least one foaming agent, and
(v) at least one silicone surfactant,
wherein the method may optionally be carried out using one or more of the following additives:
(vi) a cell-opening polyol,
(vii) a cross-linking agent and/or chain extending agent,
(viii) water.

In the third aspect, the invention relates to a viscoelastic polyurethane foam obtained by the method according to the invention.

Preferred embodiments of the invention are as defined in the dependent patent claims.

Preferably, using the polyether polyol composition according to the invention together with a standard silicone and an isocyanate with an index above 90, preferably T0180 and/or pMDI, a viscoelastic polyurethane foam with the following characteristics is obtained:
- hardness: 1-5 kPa;
- resilience: not more than 15%;
- recovery time: at least 2 s;
- density: 25-80 kg/m³;
- permanent deformation dry and wet 50%: not more than 50%;
- air flow of at least 0,2 dm³/min.

The "recovery time" parameter, also referred to as "relaxation time", defines the time it takes for the foam to recover to 90% of its initial height after being compressed to 25% of that height for 60 s.

The essence of the present invention is a polyether polyol composition according to the first aspect of the invention. The other components of the preparation used in the method for preparing the viscoelastic polyurethane foam according to the second aspect of the invention are known in the state of the art and are commonly available from most manufacturers of flexible foams. These known components include, in particular:
- a polyol with a high ethylene oxide content, the so-called "cell opener";
- an isocyanate (in particular TDI and/or pMDI);
- water;
- an amine catalyst for foaming and/or gelling;
- an organometallic catalyst (preferably tin);
- a silicone surfactant dedicated for standard foams;
- a cross-linking agent based on urea and/or high-function sugar alcohols.

Depending on the desired properties of the viscoelastic foam, it is necessary to use a polyether polyol composition according to the invention (polyol composition "A") and a suitable combination of the additives as above.

Water is preferably used as the foaming agent. If required, an inert gas such as carbon dioxide may also be used. It is proper to use water in an amount between 0.5 and 10% by weight based on the total weight of the polyol components.

Exemplary foaming and/or gelling amine catalysts to be used include tertiary amines such as trimethylamine, triethylamine, N-methylmorpholine, N-ethylmorpholine, N,N-dimethylbenzylamine, N,N-dimethylethanolamine, N,N,N',N'-tetramethyl-1,4-butanediamine, N,N-dimethylpiperazine, 1,4-diazobicyclo-2,2,2-octane, bis(dimethylaminoethyl)ether, triethylenediamine and dimethylalkylamines, wherein the alkyl group contains 4 to 18 carbon atoms. Mixtures of these tertiary amines are often used.

Examples of organometallic catalysts include catalysts based on bismuth, cobalt, zinc and tin. Tin-based organometallic catalysts are particularly preferred. Examples of such catalysts include tin octanoate, tin oleate, dimethyltin dilaurate and dibutyltin dilaurate.

Silicone surfactants are used in VE foam formulations as foam stabilisers. Such agents help stabilise the gas bubbles formed by the foaming agent during the foaming process until the polymer is cross-linked as well as affect the size thereof. Typical examples of silicone surfactants include polysiloxane/polyether copolymers commercially available under the trade names TEGOSTAB^{®} (Evonik AG), NIAX^{™} (Momentive Performance Materials) and Dabco^{™} (Evonik AG).

Examples of cross-linking agents include a solution of urea in water.

Examples of cross-linking agents based on high-function sugar alcohols include sorbitol.

The selection of the quantity and type of preparation components known from the state of the art depends on the type of product desired, and it should be determined for each case, within typical ranges, by a person skilled in the art of polyurethane foams.

Advantages of the invention include the following:
- the ability to produce viscoelastic foams with different properties and different additives using only one base polyol;
- the ability to produce viscoelastic open-cell foam based on TDI and/or pMDI using standard/universal silicone while retaining an index of more than 90, a recovery time of more than 2 s, a foam hardness of 1-5 kPa and resilience of up to 15%.
- obtaining a viscoelastic polyurethane foam from the polyol composition A, which simultaneously has a hardness in the range of 1-5 kPa, resilience of no more than 15%, a recovery time of at least 2s, a density in the range of 30-80 kg/m³, an air flow of at least 0.2 dm³/min, assuming that a standard silicone is used as surfactant, TDI80 and/or pMDI is used as isocyanate, and that the isocyanate index is at least 90, preferably at least 95.

### Embodiments

### Example 1: polyol composition A1

The polyol composition A1 has the following composition:
- 5% by weight of polyether polyol with a hydroxyl number of 450 mgKOH/g, a functionality of 5 and an ethylene oxide content of 10% based on the total polyoxyalkylene content;
- 20% by weight of polyether polyol with a hydroxyl number of 240 mgKOH/g, a functionality of 3 and an ethylene oxide content of 5% based on the total polyoxyalkylene oxide content;
- 30% by weight of polyether polyol with a hydroxyl number of 150 mgKOH/g, a functionality of 3 and an ethylene oxide content of 75% based on the total polyoxyalkylene oxide content;
- 20% by weight of polyether polyol with a hydroxyl number of 34 mgKOH/g, a functionality of 2 and an ethylene oxide content of 60% based on the total polyoxyalkylene content;
- 20% by weight of polyether polyol with a hydroxyl number of 46 mgKOH/g, a functionality of 3 and an ethylene oxide content of up to 15% based on the total polyoxyalkylene content;
- 5% by weight of polyether polyol with a hydroxyl number of 34 mgKOH/g, a functionality of 3 and an ethylene oxide content of 20% based on the total polyoxyalkylene oxide content.

### Example 2: polyol composition A2

The polyol composition A2 has the following composition:
- 2% by weight of propanetriol;
- 5% by weight of polyether polyol with a hydroxyl number of 450 mgKOH/g, a functionality of 5 and an ethylene oxide content of 10% based on the total polyoxyalkylene content
- 15% by weight of polyether polyol with a hydroxyl number of 240 mgKOH/g, a functionality of 3 and an ethylene oxide content of 5% based on the total polyoxyalkylene oxide content;
- 35% by weight of polyether polyol with a hydroxyl number of 150 mgKOH/g, a functionality of 3 and an ethylene oxide content of 75% based on the total polyoxyalkylene oxide content;
- 23% by weight of polyether polyol with a hydroxyl number of 34 mgKOH/g, a functionality of 2 and an ethylene oxide content of 60% based on the total polyoxyalkylene oxide content;
- 20% by weight of polyether polyol with a hydroxyl number of 46 mgKOH/g, a functionality of 3 and an ethylene oxide content of up to 15% based on the total polyoxyalkylene content;

### Example 3: polyol composition A3

The polyol composition A2 has the following composition:
- 2% by weight of polyether polyol with a hydroxyl number of 450 mgKOH/g, a functionality of 5 and an ethylene oxide content of 10% based on the total polyoxyalkylene content
- 26% by weight of polyether polyol with a hydroxyl number of 240 mgKOH/g, a functionality of 3 and an ethylene oxide content of 5% based on the total polyoxyalkylene content
- 38% by weight of polyether polyol with a hydroxyl number of 150 mgKOH/g, a functionality of 3 and an ethylene oxide content of 75% based on the total polyoxyalkylene content
- 26% by weight of polyether polyol with a hydroxyl number of 34 mgKOH/g, a functionality of 2 and an ethylene oxide content of 60% based on the total polyoxyalkylene content
- 8% by weight of polyether polyol with a hydroxyl number of 34 mgKOH/g, a functionality of 3 and an ethylene oxide content of 20% based on the total polyoxyalkylene oxide content.

### Examples 4-10: preparation of viscoelastic polyurethane foam

The viscoelastic polyurethane foams in examples 4 to 10 were obtained using the following components:
- polyol composition A according to any one of examples 1 to 3 (respectively polyol A1, A2 or A3);
- polyol B: "cell opener", which is a copolymer of ethylene oxide and propylene oxide with an average molecular weight of 4000 to 6000 g/mol and an ethylene oxide content of 70 to 80%;
- polyol C: standard polyol, a copolymer of ethylene oxide and propylene oxide with an average molecular weight of 3000 to 4000 g/mol and an ethylene oxide content of up to 15%;
- water: distilled water;
- amine 1: foaming amine, a 70% solution of bis(N,N-dimethylaminoethyl)ether in dipropylene glycol [Dabco^{®} BL-11 from Evonik; CAS: 3033-62-3];
- amine 2: gelling amine, a 33% solution of triethylenediamine in dipropylene glycol [Dabco^{®} 33-LV from Evonik; CAS: 280-57-9];
- surfactant: silicone surfactant TEGOSTAB^{®} BF 2370 (Evonik);
- TDI - diisocyanatoluene; a mixture of isomers, i.e. of 2,4-diisocyanatoluene and 2,6-diisocyanatoluene in the 80:20 ratio;
- MDI - a mixture of methylene diphenyl diisocyanate and polymeric methylene diphenyl diisocyanate Ongronat^{®} TR4040 (BorsodChem);
- Cross-linking agent: Rokopol^{®} EP8640.01;
- tin compound: tin octanoate (KOSMOS^{®} T-9 from Evonik)

Isocyanate index denotes the stoichiometric percentage of isocyanates in the preparation relative to the other reactants. An index value of 100 indicates that the amounts of TDI and reactants are stoichiometrically equal; an index value of below 100 indicates a stoichiometric isocyanate deficiency; an index value of more than 100 indicates a stoichiometric isocyanate excess in the preparation.

The polyols and all additives except for the isocyanate (TDI and/or MDI) were mixed together in a 1l vessel for 30 s at a stirring speed of 3500 rpm. Isocyanate was then added and stirred for a further 7 s. This was added into a paper mould. The foams were conditioned for 1 h at a temperature of 100 °C and then for 47 h at ambient temperature (20-24 °C).

The compositions of the foam preparations of examples 4 to 10 are summarised below in Table 1.

**Table 1: compositions of the foam preparations of examples 4-11**

| | Example 4 | Example 5 | Example 6 | Example 7 | Example 8 | Example 9 | Example 9 | Example 10 |
|---|---|---|---|---|---|---|---|---|
| Type of foam | VE TDI 30 | VE TDI 45 | VE MDI 50 | VE TDI/MDI 45 | VE TDI/MDI 45 | VE TDI 30 | VE TDI 30 | VE TDI 60 |
| Polyol A1 [pph] | 95 | 93 | 70 | 92 | - | - | - | - |
| Polyol A2 [pph] | - | - | - | - | 90 | 92 | - | - |
| Polyol A3 [pph] | - | - | - | - | | - | 80 | 80 |
| Polyol B [pph] | 5 | 7 | 30 | 8 | 10 | 8 | 5 | 7 |
| Polyol C [pph] | - | - | - | - | - | - | 15 | 13 |
| TDI [pph] | 46.6 | 35.9 | 46.5 | 21.6 | 24.6 | 52.9 | 48.3 | 31.8 |
| MDI [pph] | - | - | - | 21.6 | 24.6 | - | - | - |
| Isocyanate index | 92 | 95 | 93 | 95 | 90 | 90 | 90 | 95 |
| Water added [pph] | 2.64 | 1.56 | 1.64 | 1.50 | 1.64 | 2.94 | 2.94 | 0.84 |
| Amine 1 [pph] | 0.05 | 0.11 | 0.20 | 0.12 | 0.08 | 0.08 | 0.06 | 0.13 |
| Amine 2 [pph] | 0.15 | 0.13 | - | 0.24 | 0.08 | 0.08 | 0.14 | 0.27 |
| Surfactant [pph] | 1.8 | 1.2 | 1.5 | 2.0 | 2.0 | 1.8 | 1.8 | 1.2 |
| Cross-linking agent [pph] | 1.2 | 1.0 | 1.5 | 1.0 | 1.2 | 1.2 | 1.2 | 1.2 |
| Tin compound [pph] | 0.04 | 0.02 | - | - | - | - | 0.05 | 0.03 |
| | | | | | | | | |
| Density [kg/m³] | 30.2 | 43.4 | 46.2 | 42.1 | 43.8 | 29.3 | 27.3 | 59.5 |
| Hardness [kPa] | 1.7 | 1.3 | 1.4 | 1.3 | 4.9 | 4.8 | 3.4 | 2.2 |
| Recovery time [s] | 7 | 4 | 3 | 6 | 35 | 15 | 15 | 3 |
| Resilience [%] | 8 | 5 | 3 | 7 | 10 | 12 | 11 | 11 |
| Air flow [dm³/min] | 0.3 | 0.4 | 1.2 | 0.7 | 2.2 | 0.2 | 0.3 | 0.6 |

The parameters characteristic for the foams were determined in accordance with the following standards:

### Density:

Rubbers and porous plastics. Determination of apparent (volumetric) density. EN ISO 845 / October 2000.

Description: a sample with the size of 10 cm x 10 cm, 5 cm high, is measured with a calliper and weighed.

### Hardness:

Flexible porous plastics. Determination of stress-strain characteristics when compressed. EN ISO 3386-1 / August 2000.

Description: a sample with the size of 10 cm × 10 cm, 5 cm high, is compressed by 40%; at this value, the force required for compression is measured.

### Recovery time:

A 10×10×10 cm foam is compressed by the plate of the strength testing machine by 75% along the direction of growth, after 1 minute the force is released and the time it needed (using a stopwatch) to return to its original shape is measured.

### Resilience:

Flexible porous plastics. Determination of resilience. EN ISO 8307 / October 2000.

Description: A steel ball with a diameter of 16 mm is dropped from a height of 50 cm onto a sample with the size of 10 cm × 10 cm, 5 cm high. Resilience is the percentage of the height to which a ball bounced back from the foam will return.

### Air flow:

Flexible porous plastics. Determination of air flow at constant pressure drop. PN-EN ISO 7231:2000

Description: a 52x52x25 mm sample is placed in a device which generates a constant pressure difference. The air flow value is taken as the air flow rate required to maintain this pressure difference. Flow measurement is done automatically until a constant pressure drop is reached, i.e. 125 ± 1 Pa.

## Claims

1. A polyether polyol composition for the manufacture of viscoelastic polyurethane foams, **characterised in that** it contains the following components:
(a) 0-5% by weight of propanetriol,
(b) 1-10% by weight of at least one polyether polyol with a hydroxyl number of 300 to 600 mgKOH/g, a functionality of 2 to 6 and an ethylene oxide content of up to 20% based on the total polyoxyalkylene oxide content,
(c) 10-40% by weight of at least one polyether polyol with a hydroxyl number of 150 to 300 mgKOH/g, a functionality of 2 to 6 and an ethylene oxide content of up to 20% based on the total polyoxyalkylene oxide content,
(d) 10-40% by weight of at least one polyether polyol with a hydroxyl number of 100 to 300 mgKOH/g, a functionality of 2 to 6 and an ethylene oxide content of more than 50% based on the total polyoxyalkylene oxide content,
(e) 10-50% by weight of at least one polyether polyol with a hydroxyl number of 20 to 60 mgKOH/g, a functionality below 3 and an ethylene oxide content of up 30 to 60% based on the total polyoxyalkylene oxide content,
(f) 0-20% by weight of at least one polyether polyol with a hydroxyl number of 20 to 60 mgKOH/g, a functionality below 3 and an ethylene oxide content of up to 40% based on the total polyoxyalkylene oxide content,
(g) 0-30% by weight of at least one polyether polyol with a hydroxyl number of 20 to 60 mgKOH/g, a functionality of 2 to 6 and an ethylene oxide content of up to 20% based on the total polyoxyalkylene oxide content,
wherein in all the cases as above the weight % is indicated based on the total weight of the polyol composition.

2. The composition according to claim 1, comprising as component (b) a polyether polyol with a hydroxyl number of 450 mgKOH/g, a functionality of 5 and an ethylene oxide content of 10% based on the total polyoxyalkylene oxide content.

3. The composition according to claim 1 or 2, comprising as component (c) a polyether polyol with a hydroxyl number of 240 mgKOH/g, a functionality of 3 and an ethylene oxide content of 5% based on the total polyoxyalkylene oxide content.

4. The composition according to any one of claims 1 to 3, comprising as component (d) a polyether polyol with a hydroxyl number of 150 mgKOH/g, a functionality of 3 and an ethylene oxide content of 75% based on the total polyoxyalkylene oxide content.

5. The composition according to any one of claims 1 to 4, comprising as component (e) a polyether polyol with a hydroxyl number of 34 mgKOH/g, a functionality of 2 and an ethylene oxide content of 60% based on the total polyoxyalkylene oxide content.

6. The composition according to any one of claims 1 to 5, comprising as component (f) a polyether polyol with a hydroxyl number of 46 mgKOH/g, a functionality of 3 and an ethylene oxide content of up to 15% based on the total polyoxyalkylene oxide content.

7. The composition according to any one of claims 1 to 6, comprising as component (g) a polyether polyol with a hydroxyl number of 34 mgKOH/g, a functionality of 3 and an ethylene oxide content of 20% based on the total polyoxyalkylene oxide content.

8. A method for producing a viscoelastic polyurethane foam, **characterised in that** the following are reacted:
(i) a polyether polyol composition according to any one of claims 1 to 7,
(ii) at least one isocyanate component with an isocyanate index of more than 90,
in the presence of
(iii) at least one catalyst,
(iv) at least one foaming agent, and
(v) at least one silicone surfactant.

9. The method according to claim 8, wherein at least one of the following additives is further used:
(vi) a cell-opening polyol,
(vii) a cross-linking agent and/or chain extending agent,
(viii) water.

10. The method according to claim 8 or 9, wherein the isocyanate component (ii) used is a mixture selected from:
- a mixture of 2,4-diisocyanatoluene (2,4-TDI) and 2,6-diisocyanatoluene (2,6-TDI), wherein the content of 2,4-TDI in the mixture is 60 to 100% by weight, preferably 75 to 85% by weight;
- a mixture of 2,4'-methylene diphenyl diisocyanate (2,4'-MDI) and 4,4'-methylene diphenyl diisocyanate (4,4'-MDI);
- a mixture of 2,4'-MDI, 4,4'-MDI and polymethylenepolyphenyl isocyanate (PMDI);
- a mixture of 2,4-TDI, 2,6-TDI, 2,4'-MDI, 4,4'-MDI and PMDI.

11. A viscoelastic polyurethane foam obtained by the method according to any one of claims 8 to 10.

12. The foam according to claim 11, wherein the apparent density is in the range from 20 to 100 kg/m³, preferably from 30 to 60 kg/m³.

13. The foam according to claim 11 or 12, wherein the hardness (CLD40) is in the range from 0.5 to 5 kPa, preferably from 1.0 to 2.5 kPa.

14. The foam according to any one of claims 11 to 13, wherein the permanent deformation (dry 50%) is less than 15%, preferably less than 10%.

15. The foam according to any one of claims 11 to 14, wherein the recovery time is in the range of 0.1 to 20 s, preferably 2 to 10 s.

16. The foam according to any one of claims 11 to 15, wherein the resilience is less than 20%, preferably less than 15%.

17. The foam according to any one of claims 11 to 16, wherein the tensile strength is above 30 kPa, preferably above 50 kPa.

18. The foam according to any one of claims 11 to 17, wherein the relative elongation at break is above 50%, preferably above 70%.
